# EUROPEAN PATENT APPLICATION

(11) **EP 4 349 234 A1**
(43) Date of publication of application: **10.04.2024**
(21) Application number: 22814896.1
(22) Date of filing: 15.04.2022
(51) Int. Cl.: A47L 11/00, A47L 11/40

(54) **SELF-MOVING DEVICE**

(30) Priority: 02.06.2021 CN 202110614386
(71) Applicant: Beijing Roborock Innovation Technology Co., Ltd., Beijing 102206 (CN)
(72) Inventor: XIE, Haojian, Beijing 102206 (CN)
(74) Representative: Manitz Finsterwald Patent- und Rechtsanwaltspartnerschaft mbB
(86) International application number: PCT/CN2022/087154
(87) International publication number: WO 2022/252849

(57) **Abstract**

The present invention relates to a self-moving device. The self-moving device, comprising: a first image acquisition apparatus (20), a second image acquisition apparatus (30), and a controller. The first image acquisition apparatus (20) comprises an emitting assembly configured to emit infrared signal light and a first sensor configured to receive a first image formed by reflection of the infrared signal light through a target object, and distance information of the target object is determined on the basis of the first image; the second image acquisition apparatus (30) comprises a second sensor, the second sensor receives a second image formed by reflection of visible light through the target object, and type information of the target object is determined on the basis of the second image; the controller controls the behavior of the self-moving device on the basis of at least one of the distance information and the type information.

## Description

### CROSS-REFERENCE TO RELATED APPLICATION

This application claims priority of the Chinese Patent Application No. 202110614386.5, filed on June 2, 2021, which is incorporated herein by reference in its entirety to serve as a part of the present application.

### TECHNICAL FIELD

The present disclosure relates to a self-moving device.

### BACKGROUND

A self-moving device, as one type of an intelligent robot, can automatically complete cleaning of the ground with certain artificial intelligence.

In related art, due to the limitation of an obstacle avoidance strategy of the self-moving device, whether obstacle avoidance should be performed for certain situations in a cleaning path cannot be accurately determined, resulting in the problem of either missing a spot or colliding with an object.

### SUMMARY

According to a first aspect of the present disclosure, a self-moving device is provided. The self-moving device includes a first image acquisition apparatus, a second image acquisition apparatus, and a controller; the first image acquisition apparatus includes an emission component for emitting an infrared signal light and a first sensor for receiving a first image formed by reflection of the infrared signal light through a target object, and distance information of the target object is determined based on the first image; the second image acquisition apparatus includes a second sensor, and the second sensor receives a second image formed by reflection of visible light through the target object, and type information of the target object is determined based on the second image; and the controller controls behaviors of the self-moving device based on at least one of the distance information and the type information.

According to a second aspect of the present disclosure, a control method for a self-moving device is provided. The control method includes emitting infrared signal light through an emission component of a first image acquisition apparatus; receiving, by a first sensor of the first image acquisition apparatus, a first image formed by reflection of the infrared signal light through a target object; receiving a visible light image of the target object by a second sensor of a second image acquisition apparatus to form a second image; determining distance information of the target object based on the first image; determining type information of the target object based on the second image; and controlling behaviors of the self-moving device based on at least one of the distance information and the type information.

In one embodiment of the present disclosure, the emission component includes at least one linear laser device; infrared laser is emitted by the at least one linear laser device, the first image is captured by the first sensor, and the first image includes light information of the linear laser reflected by the target object.

In one embodiment of the present disclosure, the at least one linear laser device includes a first linear laser unit and a second linear laser unit; and, in a projection direction of the self-moving device, a connection line between an intersection point of linear lasers emitted by the first linear laser unit and the second linear laser unit, with the first sensor parallel to an advancing direction of the self-moving device.

In one embodiment of the present disclosure, a first linear laser and a second linear laser are emitted simultaneously or alternately.

In one embodiment of the present disclosure, the first sensor is used for capturing a background image, and the background image does not include light information of the first linear laser and the second linear laser reflected by the target object.

In one embodiment of the present disclosure, the second image acquisition apparatus further includes a fill-in light, and at least part of the visible light emitted by the fill-in light enters the second sensor through reflection of the target object.

In one embodiment of the present disclosure, based on ambient brightness, the controller controls the fill-in light to be in an "on" state or an "off" state.

In one embodiment of the present disclosure, camera three-dimensional coordinate information of the target object relative to the first image acquisition apparatus is determined based on the first image, and world three-dimensional coordinate information of the target object is determined based on the camera three-dimensional coordinate information.

In one embodiment of the present disclosure, the second image is recognized by a neural network to determine a type of the target object.

In one embodiment of the present disclosure, a relationship between the target object and dictionary data is determined based on the type information to obtain a confirmation result; an attitude of the target object is determined based on the distance information; and the self-moving device is controlled to execute a corresponding travel strategy based on the confirmation result and/or the attitude of the target object.

In one embodiment of the present disclosure, the first linear laser unit in the at least one linear laser device emits the first linear laser; the first sensor captures a first linear laser image including light information of the first linear laser reflected on the target object; the second linear laser unit in the at least one linear laser device emits the second linear laser; and the first sensor captures a second linear laser image including light information of the second linear laser reflected by the target object.

According to a third aspect of the present disclosure, a control method for a self-moving device is provided. The control method includes acquiring distance information of a target object based on an infrared light signal and acquiring type information of the target object based on a visible light signal; determining a relationship between a type of the target object and dictionary data based on the type information to obtain a confirmation result; and controlling the self-moving device to execute an obstacle avoidance strategy vis-a-vis the target object based on at least one of the confirmation result and the distance information.

In one embodiment of the present disclosure, acquiring the distance information of the target object based on the infrared light signal and acquiring the type information of the target object based on the visible light signal includes emitting infrared signal light through an emission component of a first image acquisition apparatus; receiving, by a first sensor of the first image acquisition apparatus, a first image formed by reflecting the infrared signal light through the target object; receiving, by a second sensor of a second image acquisition apparatus, a visible light image of the target object to form a second image; determining to obtain the distance information between the target object and the image acquisition apparatus of the self-moving device based on the first image; and determining the type information of the target object based on the second image.

In one embodiment of the present disclosure, the emission component includes at least one linear laser device; infrared laser is emitted by the at least one linear laser device, the first image is captured by the first sensor, and the first image includes light information of the linear laser reflected by the target object.

In one embodiment of the present disclosure, the visible light image of the target object is received by the second sensor of the second image acquisition apparatus to form the second image.

In one embodiment of the present disclosure, the second image acquisition apparatus further includes a fill-in light, and at least part of the light emitted by the fill-in light enters the second sensor through reflection of the target object.

In one embodiment of the present disclosure, the determining of the relationship between the type of target object and the dictionary data based on the type information to obtain the confirmation result includes the confirmation result belonging to a blacklist or a whitelist if the type of the target object belongs to the dictionary data; and the confirmation result not belonging to the blacklist or the whitelist if the type of the target object does not belong to the dictionary data.

In one embodiment of the present disclosure, controlling the self-moving device to execute the obstacle avoidance strategy vis-à-vis the target object based on at least one of the confirmation results and the distance information includes controlling the self-moving device to avoid the target object based on the confirmation result belonging to the blacklist or not belonging to the whitelist.

In one embodiment of the present disclosure, controlling the self-moving device to avoid the target object includes controlling the self-moving device to decelerate when a distance between the self-moving device and the target object is less than or equal to a first predetermined value; and/or executing an obstacle-free path when the distance between the self-moving device and the target object is less than or equal to a second predetermined value, wherein the first predetermined value is greater than the second predetermined value.

In one embodiment of the present disclosure, controlling the self-moving device to avoid the target object includes determining position information and attitude information of the target object based on the distance information and controlling the self-moving device to avoid the target object based on the position information and the attitude information.

In one embodiment of the present disclosure, controlling the self-moving device to execute the obstacle avoidance strategy vis-à-vis the target object based on at least one of the confirmation results and the distance information includes controlling the self-moving device to continuously advance according to an established strategy if the confirmation result not belonging to the blacklist or belonging to the whitelist.

In one embodiment of the present disclosure, controlling the self-moving device to continuously advance according to the established strategy includes continuously advancing based on information of other sensors of the self-moving device other than the first sensor and the second sensor.

In one embodiment of the present disclosure, controlling the self-moving device to execute the obstacle avoidance strategy vis-à-vis the target object based on at least one of the confirmation results and the distance information includes, if the confirmation result does not include the type of the target object, controlling the self-moving device to execute the obstacle avoidance strategy vis-à-vis the target object based on the distance information.

In one embodiment of the present disclosure, a travel speed of the self-moving device is reduced or a speed of a side brush component is reduced based on the distance information.

According to a third aspect of the present disclosure, a control method is provided for a self-moving device. The control method includes acquiring distance information of a target object based on an infrared light signal and acquiring type information of the target object based on a visible light signal; determining a relationship between the type of target object and dictionary data based on the type information to obtain a confirmation result; and controlling the self-moving device to execute an obstacle avoidance strategy vis-à-vis the target object based on at least one of the confirmation results and the distance information.

In one embodiment of the present disclosure, acquiring the distance information of the target object based on the infrared light signal and acquiring the type information of the target object based on the visible light signal includes emitting infrared signal light through an emission component of a first image acquisition apparatus; receiving, by a first sensor of the first image acquisition apparatus, a first image formed by reflecting the infrared signal light through the target object; receiving, by a second sensor of a second image acquisition apparatus, a visible light image of the target object to form a second image; determining the distance information between the target object and the image acquisition apparatus of the self-moving device based on the first image; and determining the type information of the target object based on the second image.

In one embodiment of the present disclosure, the emission component includes at least one linear laser device; infrared laser is emitted by the at least one linear laser device, the first image is captured by the first sensor, and the first image includes light information of the linear laser reflected by the target object.

In one embodiment of the present disclosure, the visible light image of the target object is received by the second sensor of the second image acquisition apparatus to form the second image.

In one embodiment of the present disclosure, the second image acquisition apparatus further includes a fill-in light and at least part of the light emitted by the fill-in light enters the second sensor through reflection of the target object.

In one embodiment of the present disclosure, determining the relationship between the type of target object and the dictionary data based on the type information to obtain the confirmation result includes the confirmation result belonging to a blacklist or a whitelist if the type of the target object belongs to the dictionary data; and the confirmation result not belonging to the blacklist or the whitelist if the type of target object does not belong to the dictionary data.

In one embodiment of the present disclosure, controlling the self-moving device to execute the obstacle avoidance strategy vis-à-vis the target object based on at least one of the confirmation results and the distance information includes controlling the self-moving device to avoid the target object based on the confirmation result belonging to the blacklist or not belonging to the whitelist.

In one embodiment of the present disclosure, controlling the self-moving device to avoid the target object includes making the self-moving device decelerate when a distance between the self-moving device and the target object is less than or equal to a first predetermined value; and/or executing an obstacle-free path when the distance between the self-moving device and the target object is less than or equal to a second predetermined value, wherein the first predetermined value is greater than the second predetermined value.

In one embodiment of the present disclosure, controlling the self-moving device to avoid the target object includes determining position information and attitude information of the target object based on the distance information and controlling the self-moving device to avoid the target object based on the position information and the attitude information.

In one embodiment of the present disclosure, controlling the self-moving device to execute the obstacle avoidance strategy vis-à-vis the target object based on at least one of the confirmation results and the distance information includes controlling the self-moving device to continuously advance according to an established strategy if the confirmation result not belonging to the blacklist or belonging to the whitelist.

In one embodiment of the present disclosure, controlling the self-moving device to continuously advance according to the established strategy includes continuously advancing based on information of other sensors of the self-moving device other than the first sensor and the second sensor.

In one embodiment of the present disclosure, controlling the self-moving device to execute the obstacle avoidance strategy vis-à-vis the target object based on at least one of the confirmation results and the distance information includes, if the confirmation result does not include the type of the target object, controlling the self-moving device to execute the obstacle avoidance strategy vis-à-vis the target object based on the distance information.

In one embodiment of the present disclosure, a travel speed of the self-moving device is reduced or a speed of a side brush component is reduced based on the distance information.

According to a fourth aspect of the present disclosure, a control method is provided for a self-moving device. The control method includes acquiring distance information and type information of a target object; determining a confirmation result of a type of target object based on the type information; and when the confirmation result is not returned, controlling the self-moving device to execute an obstacle avoidance strategy vis-à-vis the target object based on the distance information if the type of the target object is not included in the confirmation result.

In one embodiment of the present disclosure, acquiring the distance information and the type information of the target object includes emitting infrared signal light through an emission component of a first image acquisition apparatus; receiving, by a first sensor of the first image acquisition apparatus, a first image formed by reflecting the infrared signal light through the target object; receiving, by a second sensor of a second image acquisition apparatus, a visible light image of the target object to form a second image; determining to obtain the distance information between the target object and the image acquisition apparatus of the self-moving device based on the first image; and determining the type information of the target object based on the second image.

In one embodiment of the present disclosure, the visible light image of the target object is received by the second sensor of the second image acquisition apparatus to form the second image.

In one embodiment of the present disclosure, the second image acquisition apparatus further includes a fill-in light, and at least part of the light emitted by the fill-in light enters the second sensor through reflection of the target object.

In one embodiment of the present disclosure, controlling the self-moving device to execute the obstacle avoidance strategy vis-à-vis the target object based on the distance information includes determining a comparison relationship between a size of the target object and a size of a predetermined object according to the distance information; and controlling the self-moving device to execute the obstacle avoidance strategy vis-à-vis the target object based on the comparison relationship.

In one embodiment of the present disclosure, controlling the self-moving device to execute the obstacle avoidance strategy vis-à-vis the target object based on the comparison relationship includes, if the size of the target object is greater than the size of the predetermined object, controlling the self-moving device to reduce a travel speed when approaching the target obj ect.

In one embodiment of the present disclosure, controlling the self-moving device to execute the obstacle avoidance strategy vis-à-vis the target object based on the comparison relationship includes, if the size of the target object is not greater than the size of the predetermined object, controlling the self-moving device to reduce a speed of a side brush of the self-moving device when approaching the target object.

According to the self-moving device and the control method thereof of the present disclosure, the first image and the second image are acquired respectively through the first image acquisition apparatus and the second image acquisition apparatus, and the distance information and the type information are respectively determined based on the first image and the second image, thereby controlling the behaviors of the self-moving device according to at least one of the distance information and the type information.

### BRIEF DESCRIPTION OF THE DRAWINGS

Various objects, features and advantages of the present disclosure will become more apparent by considering the following detailed descriptions of the embodiments of the present disclosure in combination with the accompanying drawings. The drawings are only example illustrations of the present disclosure and are not necessarily drawn to scale. In the drawings, the same reference signs denote the same or similar parts throughout. In the drawings:
Fig. 1 is a partial schematic structural diagram of a self-moving device according to an example embodiment;
Fig. 2A is a schematic diagram of a working principle of linear laser emitters according to an example embodiment;
Fig. 2B is a schematic diagram of a relationship between linear laser emitters and a view field angle of a first camera apparatus according to an example embodiment;
Fig. 3 is a schematic diagram of a logic flow of a control method for a self-moving device according to an example embodiment;
Fig. 4A is a schematic flowchart of a control method for a self-moving device according to an example embodiment;
Fig. 4B is a schematic diagram of a time sequence workflow of a first image acquisition apparatus of a self-moving device according to a first example embodiment;
Fig. 4C is a schematic diagram of a time sequence workflow of a first image acquisition apparatus of a self-moving device according to a second example embodiment;
Fig. 4D is a schematic diagram of a time sequence workflow of a first image acquisition apparatus of a self-moving device according to a third example embodiment;
Fig. 5 is a schematic flowchart of a control method for a self-moving device according to another example embodiment;
Fig. 6 schematically shows a schematic diagram of a computer-readable storage medium in an example embodiment of the present disclosure; and
Fig. 7 schematically shows a schematic diagram of an electronic device in an example embodiment of the present disclosure.

The reference signs are explained as follows:
10, robot body; 20, first image acquisition apparatus; 21, first linear laser unit; 22, second linear laser unit; 23, linear laser camera; 30, second image acquisition apparatus; 31, recognition camera; 32, fill-in light;
300, program product; 600, electronic device; 610, processing unit; 620, storage unit; 6201, random access memory (RAM); 6202, cache storage unit; 6203, read-only memory (ROM); 6204, program/utility tool; 6205, program module; 630, bus; 640, display unit; 650, input/output (I/O) interface; 660, network adapter; 700, external device.

### DETAILED DESCRIPTION

Typical embodiments embodying features and advantages of the present disclosure will be described in detail in the following descriptions. It should be understood that the present disclosure can be varied in different embodiments without departing from the scope of the present disclosure, and the descriptions and drawings therein are essentially intended for illustration instead of limiting the present disclosure.

The following descriptions of different example embodiments of the present disclosure are carried out with reference to the drawings; the drawings form a part of the present disclosure; and different example structures, systems and steps that can implement multiple aspects of the present disclosure are shown exemplarily. It should be understood that other specific solutions of parts, structures, example apparatuses, systems and steps can be used, and structural and functional modifications can be made without departing from the scope of the present disclosure. Moreover, although the terms "above", "between", "within" and the like can be used in the description to describe different example features and elements of the present disclosure, these terms are used herein only for convenience, for example, according to example directions in the drawings. No content in the description should be understood as requiring specific three-dimensional directions of structures to fall within the scope of the present disclosure.

In the technical solutions according to the embodiments of the present disclosure, a self-moving device includes a robot body 10. The robot body 10 may have an approximately circular shape, or may have other shapes, including but not limited to a shape approximate to a "D" with a square front and a circular rear.

The self-moving device may also include a cleaning system, a sensing system, a control system, a driving system, an energy system, a human-computer interaction system and the like. The various systems coordinate with each other to enable the self-moving device to move autonomously to realize a cleaning function. Functional elements and the like that form the above systems in the self-moving device may be integrally disposed in the robot body 10. The robot body 10 may include an upper sealing cover, a chassis, and a middle frame disposed between the upper sealing cover and the chassis. The middle frame may be used as a basic frame for disposing various functional elements. The upper sealing cover and the chassis cover the surface of a main body of the device to protect internal components and enhance the aesthetics of the self-moving device.

The cleaning system may include a wet cleaning part, a dry cleaning part, and a side brush component.

The dry cleaning part may be a sweeping roller brush disposed at the bottom of the self-moving device. When performing dry sweeping, the sweeping roller brush cooperates with a dust box and a fan disposed in the robot and sucks ground impurities into the dust box through a negative pressure generated by the fan. The wet cleaning part may be located at the rear of the dry cleaning part, and the wet cleaning part may generally be a fabric, sponge, or other flexible substance with water absorption. A liquid storage tank is disposed on the self-moving device, and wet cleaning of the ground is realized by spraying water from the liquid storage tank onto the wet cleaning part.

The sensing system is used for the self-moving device to sense an external environment such as a terrain and a pose of the self-moving device itself, and can provide various position information, motion state information and the like of a machine to the control system of the self-moving device.

A buffer is used for buffering a collision of the intelligent cleaning device with surrounding objects during movement. The surface of the buffer is provided with a layer of soft rubber; and when installed on the main body of the device, the buffer is spaced a predetermined distance from the main body of the device so as to ensure that the main body of the device can have sufficient deceleration time when a collision occurs.

The control system is disposed on a circuit main board in the main body of the device. It can be understood that various control circuits for controlling operation of the intelligent cleaning device are disposed on the circuit main board. The control system includes a non-transitory memory, a computing processor and the like. The computing processor may be a central processing unit, an application processor, etc., and draws a real-time map of the environment where the intelligent cleaning device is located by using a locating algorithm according to target object information fed back by a laser ranging apparatus. In combination with distance information and speed information fed back by the buffer and a sensing apparatus, the current working state of the intelligent cleaning device, such as crossing a threshold, walking on a carpet, being located at or above a ledge or stuck below, or having a full dust box and being picked up is comprehensively judged, and next action strategies for different situations will also be given, so that the operation of the intelligent cleaning device increasingly accords with requirements and user experience is improved.

The driving system may propel the self-moving device across the ground for travel based on driving commands with distance and angle information. The driving system includes a driving wheel module, and the driving wheel module may control a left wheel and a right wheel at the same time. In order to control movement of the machine more precisely, the driving wheel module includes a left driving wheel module and a right driving wheel module, respectively. The left driving wheel module and the right driving wheel module are disposed along a lateral axis defined by the main body. In order for the self-moving device to move more stably on the ground or have a stronger movement capability, the self-moving device may include one or more driven wheels, and the driven wheels include but are not limited to universal wheels. The driving wheel module includes a walking wheel, a driving motor and a control circuit controlling the driving motor. The driving wheel module may also be connected to a circuit for measuring a driving current and an odometer.

The human-computer interaction system may include buttons on a host panel for a user to select functions, and may also include a display screen and/or an indicator light and/or a horn. The display screen, the indicator light and the horn display a current state of the machine or functional selection options to the user, and may also include mobile phone client programs. The self-moving device may display a map of an environment where a robot is located, a position of the self-moving device, status information of the self-moving device and the like to the user through the mobile phone client programs.

The energy system is used for providing electrical energy for the operation of the functional elements of various systems, and mainly includes a rechargeable battery and a power supply circuit. The rechargeable battery may be a nickel-metal hydride battery and a lithium battery. When power in the rechargeable battery is lower than a predetermined minimum power, charging may be performed by connecting a charging electrode disposed on the side or under the main body of the device to a charging device.

In the embodiments according to the present disclosure, specific positions of a first image acquisition apparatus 20, a first linear laser unit 21, a second linear laser unit 22, a fill-in light 32 and a second image acquisition apparatus 30 in the robot body 10 are not limited. For example, the positions may be, but are not limited to, the front side, the rear side, the left side, the right side, the top, the middle, the bottom, and the like of the robot body 10. Further, they may be disposed at the middle position, the top position or the bottom position in a height direction of the robot body 10.

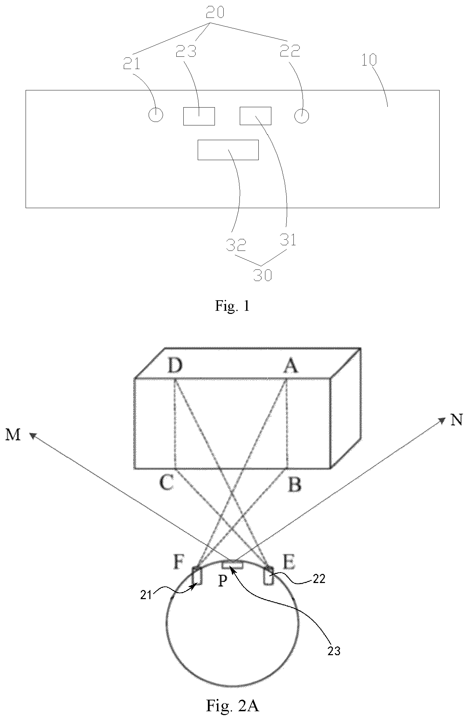

As shown in Fig. 1, the robot body 10 is provided with the first image acquisition apparatus 20 and the second image acquisition apparatus 30. The first image acquisition apparatus 20 includes the first linear laser unit 21, the second linear laser unit 22 and a linear laser camera 23. The first linear laser unit 21 and the second linear laser unit 22 are located at two sides of the linear laser camera 23, and are used for emitting lasers with linear projections. The second image acquisition apparatus 30 includes a recognition camera 31 and the fill-in light 32. The linear laser camera 23 acquires a first image, and the recognition camera 31 acquires a second image. The linear laser camera 23 is an example of a first sensor. In other embodiments, the first sensor may also be selected as other sensors that can cooperate with the linear laser units and capture linear laser images, which is not limited in the present disclosure. Similarly, the recognition camera 31 is an example of a second sensor. In other embodiments, the second sensor may also be selected as other sensors that can obtain a visible light image or cooperate with the fill-in light to obtain the visible light image, which is also not limited in the present disclosure.

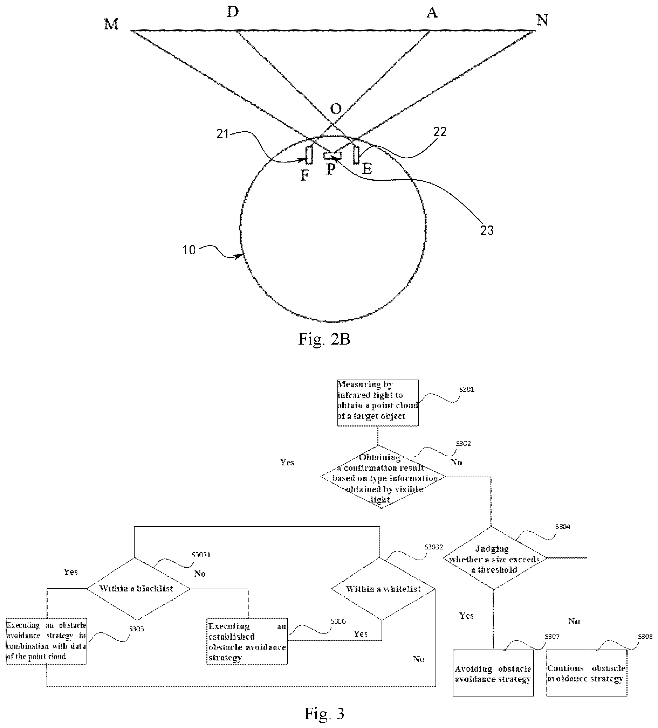

Next, a working principle of the first image acquisition apparatus will be described in combination with Fig. 2A and Fig. 2B. For example, the first linear laser unit 21 and the second linear laser unit 22 are used for emitting the lasers with linear projections. For example, the first linear laser unit 21 and the second linear laser unit 22 emit laser planes to the outside. After the laser planes reach a target object, linear lasers will be formed on the surface of the target object, and an environmental image will be detected by the linear lasers. A plane ABF and a plane CDE shown in Fig. 2A represent the laser planes of the first linear laser unit 21 and the second linear laser unit 22, and a line segment AB and a line segment CD in Fig. 2A represent the linear lasers. For example, the first linear laser unit 21 and the second linear laser unit 22 may be laser tubes. It may be understood that the first linear laser unit 21 and the second linear laser unit 22 may also be other structures that meet the requirements, which is not limited in the present disclosure. It can be understood that the first linear laser unit 21 and the second linear laser unit 22 include a point laser source and a lens therein. For example, a wave mirror is disposed in an emission direction (such as the front) of the point laser source. For example, the wave mirror is a concave lens, the concave lens is disposed in front of the laser tube, the laser tube emits light (such as infrared light) of a specific wavelength, and after passing through the wavy concave lens, the light becomes divergent light, thus forming a straight line on a plane perpendicular to an optical path.

As shown in Fig. 2A and Fig. 2B, the first linear laser unit 21 and the second linear laser unit 22 are distributed at two sides of the linear laser camera 23. The linear laser camera 23 works in cooperation with the first linear laser unit 21 and the second linear laser unit 22. That is, the first image acquired by the linear laser camera 23 includes reflected light information of the linear lasers emitted by the first linear laser unit 21 and the second linear laser unit 22 and reflected by the target object. A distance between the target object and the robot body 10 or the linear laser camera 23 can be measured according to the first image, and then a corresponding obstacle avoidance operation is performed. In the present embodiment, Fig. 2A is a schematic diagram of a working principle of the linear laser emitters, wherein the letter P represents the linear laser camera 23, and letters E and F represent the second linear laser unit 22 and the first linear laser unit 21 located at two sides of the linear laser camera 23; straight lines PM and PN represent two boundaries of a horizontal view field of the linear laser camera 23. That is, LMPN represents a horizontal view field angle of the linear laser camera 23. The first linear laser unit 21 and the second linear laser unit 22 emit the laser plane FAB and the laser plane ECD to the outside. After the laser planes reach the target object, the linear lasers, namely the line segment AB and the line segment CD shown in Fig. 2A, will be formed on the surface of the target object. Since the linear laser segment AB and the line segment CD emitted by the linear laser emitters are located within a view field scope of the linear laser camera 23, the linear lasers can help to detect the information such as a contour, a height and/or a width of an object within the view field angle of the linear laser camera 23, and a first camera apparatus may acquire the environmental image detected by the linear lasers.

Further, according to the first image acquired by the linear laser camera 23, the control system may calculate the distance from the robot body 10 where the linear laser camera 23 is located to the target object in front. For example, the distance from the linear laser camera 23 or the robot body 10 to the target object in front may be calculated by using a triangulation ranging method. For example, Fig. 2B depicts a schematic diagram of a view angle of the embodiment shown in Fig. 2A. The letter P represents the linear laser camera 23, the letters E and F represent the second linear laser unit 22 and the first linear laser unit 21 located at two sides of the linear laser camera 23; point A represents a projection of the line segment AB in the horizontal plane, point D represents a projection of the line segment CD in the horizontal plane, L MPN represents the horizontal view field angle of the linear laser camera 23, and point O represents an intersection point between the linear lasers emitted by the first linear laser unit 21 and the second linear laser unit 22 and an optical axis of the linear laser camera 23. By taking the linear laser emitter F as an example, after the first linear laser unit 21 and the linear laser camera 23 are both fixedly installed on the robot body 10, a focal length of the linear laser camera 23 is known, an emission angle of the linear laser emitter F is known; that is, an included angle between a straight line FA and the optical axis PO is known, and the distance of the line segment OP is known; a central vertical distance between the linear laser emitter F and the linear laser camera 23 in the horizontal plane is known, the environmental image reflected by the point A of the target object and acquired by the linear laser camera 23 is defined as point A'; and since point A' will have a certain offset from the optical axis straight line PO of the linear laser camera 23 and the offset is known, the vertical distance between A and F can be measured according to a triangle similarity principle in combination with the above known conditions; that is, the distance between the target object and the first linear laser unit 21 can be obtained.

The above calculation method is only an example illustration. In other embodiments, triangle calculation may be performed by using the focal length of the camera and the projection of the point A on an imaging plane of the camera, which is not limited in the present disclosure. The distance between the linear laser camera 23 or the robot body 10 and the target object in front may also be calculated according to a time-of-flight (TOF) method.

It can be understood that the situation of the target object in front may also be determined according to deformation characteristics of the line segment of the linear laser acquired by the first sensor and reflected by the target object, so as to determine specific functional operations, such as performing an obstacle avoidance operation or continuing a sweeping operation.

The second sensor is used for capturing the environmental image. The second sensor is connected to the control system of the self-moving device. The control system can control exposure of the second sensor. The second sensor acquires the second image according to an exposure instruction of the control system. The second image is analyzed and processed by the control system, and the type of the target object can be recognized.

In the present embodiment, the linear laser camera 23 works in cooperation with the first linear laser unit 21 and the second linear laser unit 22. The image acquired by the linear laser camera 23 is used for recognizing the distance of the target object, and the image acquired by the recognition camera 31 is used for recognizing the type of the target object. Therefore, the type of the target object can be determined according to the environmental image captured by the recognition camera 31; whether the robot body 10 needs to perform the obstacle avoidance operation is determined according to the type of the target object; and the distance of the target object is determined through cooperation of the linear laser camera 23 and the first linear laser unit 21 as well as the second linear laser unit 22 when the robot body 10 needs to perform the obstacle avoidance operation, so as to perform the corresponding obstacle avoidance operation. The sweeping operation is directly performed when the robot body 10 does not need to perform the obstacle avoidance operation, thereby reducing the possibility of obstacle avoidance misoperation of the self-moving device and improving the accuracy of automatic obstacle avoidance of the self-moving device.

For example, the number of the second images is multiple, such as 500, 1,000, or other numbers that meet requirements. For example, the number of the second images may be determined by adjusting an exposure frequency of the recognition camera 31.

In some embodiments, the linear laser camera 23 is an infrared sensor, and an infrared filter is disposed in front of the infrared camera to allow only infrared light to pass through; for example, only light with a wavelength of 808 nm will pass through. The first linear laser unit 21 and the second linear laser unit 22, which work in cooperation with the linear laser camera 23, are infrared laser tubes that emit infrared laser. The recognition camera 31 is an RGB camera, and a visible light filter is disposed in front of the RGB camera to allow only visible light to pass through. It can be understood that the linear laser camera 23 and the recognition camera 31 may also be other structures that meet the requirements, as this is not specifically limited in the present disclosure.

In some embodiments, on one hand, the linear laser camera 23 and the recognition camera 31 are disposed side by side in a horizontal direction; that is, the first camera apparatus and the recognition camera 31 are distributed left and right. For example, the linear laser camera 23 is located at the left side of the recognition camera 31, or the linear laser camera 23 is located at the right side of the recognition camera 31. It can be understood that in this case the first linear laser unit 21 and the second linear laser unit 22 are distributed at two sides of the linear laser camera 23 and the recognition camera 31; that is, the linear laser camera 23 and the recognition camera 31 are located between the first linear laser unit 21 and the second linear laser unit 22, and are situated at two sides.

On the other hand, the linear laser camera 23 and the recognition camera 31 are disposed side by side in a vertical direction; that is, the first camera apparatus and the recognition camera 31 are distributed vertically. For example, the linear laser camera 23 is located above the recognition camera 31, or the linear laser camera 23 is located below the recognition camera 31. It can be understood that, in this case, the first linear laser unit 21 and the second linear laser unit 22 are distributed at two sides of the linear laser camera 23 and the recognition camera 31; that is, the linear laser camera 23 and the recognition camera 31 are located between the first linear laser unit 21 and the second linear laser unit 22, and are situated at two sides.

For example, in a projection direction of the self-moving device (for example, a top-view direction), a connection line OP between the intersection of point O of the linear lasers emitted by the first linear laser unit 21 and the second linear laser unit 22 and the first sensor P is parallel to an advancing direction of the self-moving device. Therefore, the linear laser camera 23 can always be disposed forward as the first sensor, and it can ensure that the light of the first linear laser unit 21 and/or the second linear laser unit 22 can be detected within a maximum range without requiring adjustment of the first sensor left and right, thereby increasing the reliability of detecting the target object by the self-moving device.

In some embodiments, the self-moving device further includes a fill-in light 32. The fill-in light 32 is used for filling in the light when the recognition camera 31 executes a capturing action, so as to meet capturing requirements of the recognition camera 31, ensure that the recognition camera 31 can clearly and accurately capture the environmental image, and so improve the recognition accuracy of the target object.

In some embodiments, the self-moving device may include both the fill-in light 32 and an ambient light sensor. The ambient light sensor is used for detecting the brightness of ambient light, so that under the circumstance that the recognition camera 31 cannot clearly and accurately capture the environmental image when the ambient light is weak, that is, the current ambient light does not meet the exposure operation of the recognition camera 31, the fill-in light 32 is used for filling in the light to meet the capturing requirements of the recognition camera 31, thereby ensuring that the recognition camera 31 can clearly and accurately capture the environmental image and improving the recognition accuracy of the target object.

Further, the control system of the self-moving device is connected to the fill-in light 32 and the ambient light sensor, and controls a working state of the fill-in light 32 according to a detection signal of the ambient light sensor, so as to fill in light for the exposure operation of the recognition camera 31. For example, the ambient light sensor sends a signal to the control system when the requirements of the exposure operation of the recognition camera 31 cannot be met, as when the ambient light sensor detects that the ambient light is dark and the ambient light is insufficient, or the type of the target object cannot be accurately and clearly confirmed by the second image captured by the recognition camera 31 under the circumstance of such ambient light; for example, the self-moving device enters a relatively dim environment such as the bottom of a bed in the process of cleaning the ground. The control system controls the fill-in light 32 to work according to the received signal, and the illumination is increased, so that the ambient light after light filling meets the capturing requirements of the recognition camera 31, and the type of the target object can be accurately and quickly confirmed according to the clearer second image captured by the recognition camera 31. It can be understood that the ambient light sensor sends a signal to the control system when the ambient light sensor detects that the ambient light is bright and meets the requirements of the exposure operation of the recognition camera 31, and the control system causes the fill-in light 32 to stop working according to the received signal, which is conducive to energy saving.

In other embodiments, brightness detection of the ambient light may also be achieved without additionally disposing the ambient light sensor. For example, the ambient brightness can be obtained according to the captured second image. In this case, disposal of the ambient brightness sensor is not required; the ambient brightness can be obtained from the information provided by the image alone, and the state of the fill-in light is controlled based on the ambient brightness.

For example, the target object is recognized according to the second image. For the target object image captured by the fill-in light 32, feature vectors of the target object image and feature vectors of images in the dictionary data may be compared through a neural network such as a trained machine-learning model to obtain a similarity therebetween.

In some embodiments, the linear laser emitter (at least one of the first linear laser unit 21 and the second linear laser unit 22) emits laser of a first preset wavelength when the first image is acquired. The fill-in light 32 emits light of a second preset wavelength when the second image is acquired. The first preset wavelength and the second preset wavelength may be or may not be equal.

In some embodiments, a first linear laser and a second linear laser are alternately emitted. Since the time of activation of the first linear laser unit 21 and time of the second linear laser unit 22 are staggered, the first linear laser and the second linear laser emitted during alternate activation will not overlap. For example, the first linear laser unit 21 and the second linear laser unit 22 are alternately activated in time sequence.

In some embodiments, a background image acquired by the linear laser camera 23 is obtained, and the laser of a first predetermined wavelength is deactivated when the background image is acquired; differences between pixel points at the same positions in the first image and the background image are made to obtain a corrected laser image; the corrected laser images are further obtained according to the first images acquired by the first image acquisition apparatus 20 at multiple time points, and a point cloud is obtained in combination with the position of the self-moving device during acquisition, wherein the distance between the target object and the first image acquisition apparatus 20 is obtained according to each corrected laser image in combination with a position of a moving body during acquisition. The background image can be acquired for removing background noise, which further reduces effects of light and glare.

The self-moving device further includes an image acquisition module, a ranging module, a target recognition module and a control module. The image acquisition module is used for acquiring the first image, the second image and the background image obtained by the first image acquisition apparatus 20 and the second image acquisition apparatus 30; the ranging module is used for obtaining the distance information between the target object and the image acquisition apparatus according to the first image; the target recognition module is used for recognizing the target object according to the second image; and the control module is used for directing the self-moving device to act according to a received recognition result of the target recognition module. The control module belongs to a part of the control system.

The recognition result includes whether the type information of the target object has been determined or the type information of the target object cannot be determined.

In some embodiments, the self-moving device performs obstacle avoidance on the target object when the control module judges that the type information is consistent with preset type information.

In some embodiments, the self-moving device does not perform obstacle avoidance on the target object when the control module judges that the type information is consistent with the preset type information.

In some embodiments, the self-moving device performs obstacle avoidance on the target object when the control module cannot determine the type information of the target object and size information is judged to be greater than preset size information.

In some embodiments, the self-moving device does not perform obstacle avoidance on the target object when the control module cannot determine the type information of the target object and the size information is judged to be less than the preset size information.

An obstacle avoidance strategy of the self-moving device will be described in detail below in combination with Fig. 3, Fig. 4A to Fig. 4D and Fig. 5. Referring to Fig. 3, at S301, the self-moving device uses the first image acquisition apparatus to acquire the point cloud of the target object based on the infrared light. At S302, the second image acquisition apparatus is used for recognizing the type information of the target object based on the visible light, and the type of the target object may be compared with the dictionary data to obtain a confirmation result. At S3031, S305 is performed when the type of the target object is consistent with that in the dictionary data and a blacklist is in the dictionary data, i.e., the self-moving device adopts an obstacle avoidance strategy (data of the point cloud is combined in the obstacle avoidance process; for example, an angle and form of the obstacle are obtained for precise obstacle avoidance, which may be described in combination with the following embodiments). At S3032, S306 is performed when the type of the target object is consistent with that in the dictionary data and a whitelist is in the dictionary data, i.e., the self-moving device travels according to an established obstacle avoidance strategy.

At S302, when a determination result cannot be obtained by means of the visible light and the type of the target object cannot be recognized (that is, the target object is a generic object), and at S304, if the recognized target object is larger, S307 is performed, i.e., the self-moving device may be caused to execute the obstacle avoidance strategy; for example, a travel speed is reduced when the self-moving device is about to encounter the target object so as not to collide with the target object; and at S304, if the recognized target object is smaller, S308 is performed, i.e., the self-moving device may be caused to execute a travel strategy; for example, a speed of a side brush is reduced when the self-moving device is about to encounter the obstacle so as to prevent the target object from being knocked over.

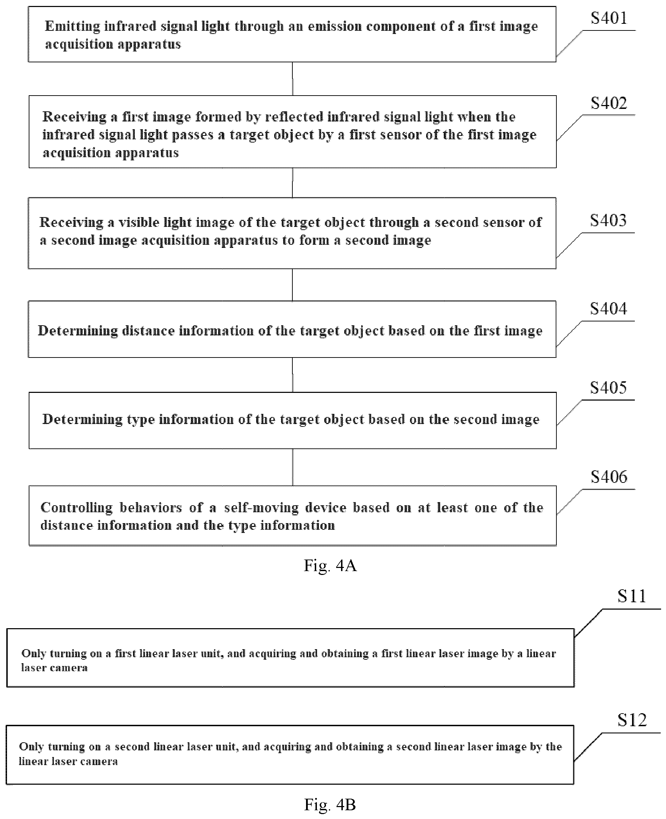

An embodiment of the present disclosure provides a control method for a self-moving device. Referring to Fig. 4A, the method includes:
S401, emitting infrared signal light through an emission component of a first image acquisition apparatus;
S402, receiving a first image formed by reflection of the infrared signal light through a target object by a first sensor of the first image acquisition apparatus;
S403, receiving a visible light image of the target object through a second sensor of a second image acquisition apparatus to form a second image;
S404, determining distance information of the target object based on the first image;
S405, determining type information of the target object based on the second image; and
S406, controlling behaviors of the self-moving device based on at least one of the distance information and the type information.

In the control method for the self-moving device according to one embodiment of the present disclosure, the first image is formed by receiving the infrared signal light through the first image acquisition apparatus 20, visible light is received through the second image acquisition apparatus 30 to form the second image, and the distance information and the type information are determined respectively based on the first image and the second image. Therefore, the behaviors of the self-moving device can be controlled according to at least one of the distance information and the type information so as to improve the operation capacity of the self-moving device and avoid the problem of missing a spot or collision with the target object of the self-moving device.

It should be noted that the first image and the second image are respectively acquired by the first image acquisition apparatus 20 and the second image acquisition apparatus 30; that is, the first image acquisition apparatus 20 and the second image acquisition apparatus 30 capture images independently, which can improve the frequency of image capturing, so as to improve the operation responsiveness of the self-moving device.

At S401, the emission component of the first image acquisition apparatus 20 includes at least one linear laser device, wherein the first image is captured by the first sensor and the first image includes light information of the linear laser reflected by the target object. The use of the linear laser device can improve an acquisition range of the target object, and can also measure a taller target object, so that the full view of the target object can be fully reflected and accurate ranging data can be obtained.

For example, two linear laser devices may also be included, wherein the first linear laser unit 21 emits a first linear laser; the linear laser camera 23 captures a first linear laser image including the light information of the first linear laser reflected by the target object; the second linear laser unit 22 emits a second linear laser; and the linear laser camera 23 captures a second linear laser image including light information of the second linear laser reflected by the target object. The first linear laser unit 21 and the second linear laser unit 22 emit the linear lasers from different angles; that is, the linear laser camera 23 obtains the information of the target object from different angles, which enriches the acquired data and improves the accuracy of the data.

In some embodiments, as shown in Fig. 4B, the first image acquisition apparatus 20 may work in the following time sequence: in S11, only the first linear laser unit 21 is activated, and the linear laser camera 23 acquires and obtains the first linear laser image; and in S12, only the second linear laser unit 22 is activated, and the linear laser camera 23 acquires and obtains the second linear laser image.

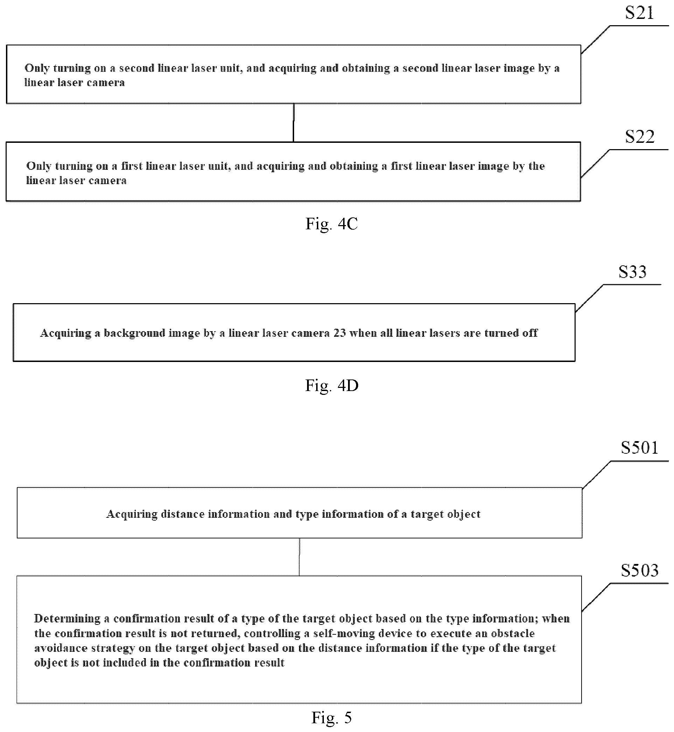

In some embodiments, as shown in Fig. 4C, the first image acquisition apparatus 20 may work in the following time sequence: in S21, only the second linear laser unit 22 is activated, and the linear laser camera 23 acquires and obtains the second linear laser image; and in S22, only the first linear laser unit 21 is activated and the linear laser camera 23 acquires and obtains the first linear laser image.

Fig. 4B and Fig. 4C show a situation in which the first linear laser unit 21 and the second linear laser unit 22 emit the lasers alternately. In other embodiments, the first linear laser unit 21 and the second linear laser unit 22 may emit the lasers simultaneously. Upon once capturing, the linear laser camera 23 can obtain the light information of the first linear laser unit 21 and the second linear laser unit 22 reflected on the target object at the same time.

In one embodiment, the control method for the self-moving device further includes that the linear laser camera 23 receives a background image, and the background image does not include light of the first linear laser and the second linear laser reflected by the target object. For example, as shown in Fig. 4D, in S33, the linear laser camera 23 acquires the background image when all linear lasers are deactivated. The background image may be subjected to an operation with the first linear laser image and the second linear laser image obtained in S11 and S12 to remove background noise. The background image may also be subjected to an operation with the second linear laser image and the first linear laser image obtained in S21 and S22 to remove the background noise. For example, the differences between pixel points in the first linear laser image and pixel points in corresponding positions in the background image are solved to obtain a corrected laser image, and then the distance between the target object and the camera apparatus can be obtained according to the corrected laser image, which can improve the measurement accuracy.

In some embodiments, S33 may be executed between S11 and S12, or before S11, or after S12. Similarly, S33 may be executed between S21 and S22, or before S21, or after S22.

For example, before or after the first linear laser unit 21 and the second linear laser unit 22 are activated at the same time and the first linear laser image is acquired, the first linear laser unit 21 or the second linear laser unit 22 may be kept in an "off" state to obtain the background image through acquisition, and the background image and the first linear laser image are subjected to an operation to remove the background noise.

In one embodiment, the second image acquisition apparatus 30 includes the second sensor. For example, the second sensor is at least one recognition camera 31, the visible light image of the target object is captured by the at least one recognition camera 31 to form the second image, and the second image includes the light information of the visible light reflected by the target object. The recognition camera 31 is disposed to ensure independent acquisition of the second image, and the first image acquisition apparatus and the second image acquisition apparatus may work at the same time, thereby increasing the acquisition frequency of the image. Moreover, since the visible light image can contain color information, more detailed data of the target object can be provided, and a recognition effect can be improved by recognizing the second image formed by the visible light image.

In one embodiment, the quality of the obtained second image is degraded when the self-moving device operates to a position with dark light. Therefore, the second image acquisition apparatus 30 may further be provided with a fill-in light 32 therein, and at least part of the visible light emitted by the fill-in light 32 enters the recognition camera 31 through reflection of the target object. The fill-in light 32 is disposed to improve the brightness of the ambient light, thereby improving the quality of the second image captured by the recognition camera 31, and further improving recognition effect of the second image.

In one embodiment, the fill-in light 32 is controlled to be in an "on" state based on the ambient brightness. Different light filling states are provided according to different ambient brightness, which can improve the acquisition quality of the second image, thereby improving the recognition accuracy.

In one embodiment, an ambient brightness sensor may be disposed to obtain the situation of the ambient brightness, the ambient brightness is acquired through the ambient brightness sensor, and the state of the fill-in light is determined by the ambient brightness.

In one embodiment, camera three-dimensional coordinate information of the target object relative to the first image acquisition apparatus 20 is determined based on the first image, and world three-dimensional coordinate information of the target object is determined based on the camera three-dimensional coordinate information.

An origin point of camera three-dimensional coordinates may be an optical center of the first image acquisition apparatus 20, an origin point of a world coordinate system may be set as a robot base or an end of an actuator, and the actuator may be a cleaning system. However, the setting of the camera three-dimensional coordinates and the world three-dimensional coordinates is not limited in the present disclosure.

For example, the self-moving device is at coordinate A, the points where the linear lasers illuminate the target object at this time are obtained by ranging, SLAM three-dimensional coordinates of these points are calculated, and the coordinate is B after the self-moving device moves or rotates. At this time, if the linear lasers also illuminate the target object, ranging is also performed and SLAM three-dimensional coordinates of other points on the target object may be calculated. By continuously moving the self-moving device, a point cloud of the target object may be recovered. This point cloud can basically reflect a specific size, form and position of the target object, so that greater accuracy can be achieved when obstacle avoidance rules are formulated, and it can ensure that the self-moving device can accurately achieve obstacle avoidance.

Optionally, the SLAM coordinates may be estimated through monocular ranging, so that a point cloud of the target object is restored in combination with point cloud information of the above linear lasers for more accurate obstacle avoidance. Data of the point cloud is used to construct a three-dimensional model of the target object, which obtains a more accurate specific size, form and position of the target object in fact.

In one embodiment, attitude information of the target object refers to acquiring contour information and an occupied position of an obstacle. For example, a circumferential outer contour of an object may be determined in a preset environment space, and the circumferential outer contour constructed at this time may be considered as the attitude information of the target object. For example, if the target object is a square garbage can, it can be determined which direction the target object as a whole is biased toward after the orientations of east, west, south and north are defined in the environment space.

In one embodiment, determining the type information of the target object based on the second image includes recognizing the second image by using a neural network to determine the type of the target object.

In one embodiment, controlling the behaviors of the self-moving device based on at least one of the distance information and the type information includes determining a relationship between the target object and dictionary data to obtain a confirmation result based on the type information, determining an attitude of the target object based on the distance information, and controlling the self-moving device to execute a travel strategy based on the confirmation result and/or the attitude of the target object.

In order to describe the obstacle avoidance strategy of the self-moving device in detail, continuing to refer to Fig. 3, the type information of the target object is obtained based on the second image obtained by the self-moving device. It is necessary to consider whether the preset type information is a blacklist or a whitelist when the type information is judged to be consistent with preset type information (that is, the dictionary data); and the self-moving device executes obstacle avoidance on the target object (that is, the travel strategy is various strategies for obstacle avoidance) when the preset type information is the blacklist; that is, it is indicated that the self-moving device needs to perform obstacle avoidance on the target object when the acquired type information of the target object belongs to the preset type information, so as to improve an obstacle avoidance capability of the self-moving device.

It can be understood that the preset type information belongs to a type group; that is, it may include multiple types of information. For example, the type group includes at least one of slippers, fabrics (socks), shit, data lines, bases, and chairs.

For example, if the confirmation result obtained after determining the relationship between the target object and the dictionary data based on the type information of the second image is that the target object is consistent with the dictionary data, it is assumed that the target object in front of the self-moving device is recognized as the data line; and if the data line is in the blacklist at this moment, the data line belongs to the object that needs to be avoided by the self-moving device. Then it is necessary to combine the data of the point cloud of the target object obtained by the first image acquisition apparatus to obtain precise information such as a position, an angle and an extension direction of the data line. When approaching the data line, the self-moving device can precisely avoid the data line. Therefore, the self-moving device will not be entangled by the data line and will continue to move. Meanwhile, the surrounding area of the data line is swept to the maximum extent.

The aforementioned avoidance strategy for the data line may not only include the obstacle-free path of the self-moving device, but also include speed control of the self-moving device after the target object is found to be the data line. For example, after the data line is found, by reading a distance between the self-moving device and the data line, the self-moving device may be kept moving at the current speed when the distance exceeds a first predetermined value, the self-moving device is controlled to decelerate when the distance is less than or equal to the first predetermined value, and the obstacle-free path starts to be executed when the self-moving device continues to walk until the distance is less than or equal to a second predetermined value. The distance between the self-moving device and the data line is obtained by the first image acquisition apparatus, and the obtaining method is as described above, which will not be repeated here.

For example, the obstacle-free path of the self-moving device may include following a precise shape of the target object such as the data line, keeping a distance from the edge of the self-moving device to each point on the data line as a constant value; or determining a connection line between two endpoints in the extension direction of the data line, keeping a fixed distance from the connection line, walking in a direction parallel to the connection line, and so on.

The foregoing describes the obstacle avoidance strategy of the self-moving device by taking the data line as an example. In other embodiments, for example, the target object in front of the self-moving device is recognized as the shit. At this time, if the shit is in the blacklist, the shit belongs to the object that needs to be avoided by the self-moving device. Considering the particularity of the shit, once contaminated or collided, the self-moving device will smear the whole house with the shit, which will greatly deteriorate the user experience. Therefore, when considering the obstacle avoidance strategy of the self-moving device for the target object, precise information such as a position and angle of the shit may be obtained in combination with the data of the point cloud of the target object obtained by the first image acquisition apparatus. When approaching the shit, the self-moving device may avoid the shit immediately and accurately.

For a special target object such as the shit, a larger first predetermined value may be selected to ensure early deceleration in the obstacle avoidance strategy, and the second predetermined value may be increased to keep a sufficient distance between the self-moving device and the shit. Avoidance is performed in advance to ensure that the self-moving device does not have any contact with the target object.

The foregoing exemplarily describes the obstacle avoidance strategy of the self-moving device when the target object belongs to the blacklist in the dictionary data. The following will continue to describe the obstacle avoidance strategy of the self-moving device for the target object belonging to the whitelist in the dictionary data in combination with Fig. 3.

For example, the whitelist includes paper scraps, coffee beans, rice grains and other target objects. The whitelist lists the objects that do not need to be avoided. If it is determined that the result belongs to the dictionary data (for example, the paper scraps), the self-moving device is controlled to continue to advance according to the established obstacle avoidance strategy. In one embodiment, the self-moving device then continues to advance based on other sensor information other than the distance information and type information of the self-moving device, such as a bumper sensor and a cliff sensor, which can ensure the clearing of the target object by the self-moving device, thereby completely clearing the ground to prevent missing a spot.

If all the target objects that do not need to be avoided are listed in the whitelist, the self-moving device is controlled to avoid the target object once the confirmation result is not belonging to the whitelist in the dictionary data; for example, the confirmation result is the slippers which, however, do not belong to the "whitelist." The data of the point cloud of the target object needs to be combined in the avoidance process, and the strategy of controlling the self-moving device for obstacle avoidance may refer to the above, and will not be repeated here.

The foregoing describes the obstacle avoidance strategies of the self-moving device when the target object belongs to the blacklist or whitelist in the dictionary data. The following will continue to describe the situation where the type information of the target object is not returned in combination with Fig. 3 and Fig. 5.

In one embodiment, the self-moving device is controlled to execute the obstacle avoidance strategy vis-à-vis the target object based on at least one of the confirmation results and the distance information: if the confirmation result does not contain the type of the target object, the self-moving device is caused to execute the obstacle avoidance strategy vis-à-vis the target object based on the distance information. That is, when the type of the target object cannot be recognized, the obstacle avoidance strategy needs to be determined through the distance information so as to ensure that the self-moving device can accurately and timely determine the obstacle avoidance strategy in the case of any similar target object.

Further, a travel speed of the self-moving device or a speed of a side brush component is reduced based on the distance information to avoid accidental collision with the target object and ensure that the self-moving device safely and reliably realizes the obstacle avoidance.

Similar to the method described above, the control method includes S501 and S503.

In S501, the distance information and the type information of the target object are acquired.

In S503, the confirmation result of the type of the target object is determined based on the type information.

When the confirmation result is not returned, the self-moving device is directed to execute the obstacle avoidance strategy vis-à-vis the target object based on the distance information if the confirmation result does not contain the type of the target object.

The control method for the self-moving device according to one embodiment of the present disclosure acquires the distance information and the type information of the target object. The self-moving device cannot recognize the target object in front if the type of the target object cannot be determined. Therefore, the self-moving device is controlled to execute the obstacle avoidance strategy vis-à-vis the target object based on the distance information, so as to ensure that the obstacle avoidance strategy can be executed even if the second image acquisition apparatus fails to recognize the type of the target object, thereby improving the obstacle avoidance capability of the self-moving device.

It should be noted that, at S501, the distance information between the target object and the image acquisition apparatus of the self-moving device is determined based on the first image, the type information of the target object is determined based on the second image, and the first image and the second image are respectively acquired by the first image acquisition apparatus 20 and the second image acquisition apparatus 30. The methods for acquiring the first image and the second image and the related control method are not described here, and may refer to the above embodiments.

In one embodiment, at S503, directing the self-moving device to execute the obstacle avoidance strategy vis-à-vis the target object based on the distance information includes determining a comparison relationship between a size of the target object and a predetermined object size according to the distance information and controlling the self-moving device to execute the obstacle avoidance strategy vis-à-vis the target object based on the comparison relationship. That is, the obstacle avoidance strategy needs to be determined by the size of the target object when the type of the target object cannot be determined.

At S503, if the size of the target object is greater than the predetermined object size, the obstacle avoidance strategy is an obstacle avoidance strategy for the self-moving device to avoid the target object. If the size of the target object is not greater than the predetermined object size, the self-moving device is controlled to implement a cautious obstacle avoidance strategy and reduce the speed of the side brush of the self-moving device when approaching the target object to prevent the side brush from knocking the target object over.

For example, the size of the target object may include a height, length and/or width of the target object. For example, the obstacle avoidance strategy may be determined based on one of the height, length and width.

For example, the obstacle avoidance strategy is determined based solely on the height of the target object, and it may be determined that the self-moving device executes the obstacle avoidance strategy to avoid the target object if the height of the target object is greater than a spanning height of the self-moving device. Similarly, the obstacle avoidance strategy may also be determined based on the length or width of the target object. If the length or width of the target object is relatively great, the self-moving device may also execute an avoidance behavior, which avoids clearing failure of the self-moving device or damage to the self-moving device after clearing the target object. For example, the predetermined object size information may be a fixed value.

Alternatively, the obstacle avoidance strategy may be determined based on two of height, length and width. For example, a length and width threshold is set as a*b cm. When the length dimension of the target object is less than the threshold, the non-obstacle avoidance strategy is executed, and when the size of the target object is greater than the threshold, the obstacle avoidance strategy is executed.

Alternatively, the obstacle avoidance strategy is determined by considering the height, length and width comprehensively. For example, when the target object is relatively tall and both the width and length are relatively small, a movement speed of the self-moving device may be reduced in order to prevent high-speed movement of the self-moving device from toppling the target object; and after the self-moving device arrives as a certain position, the self-moving device is enabled to perform a backward movement or turning movement, etc., so as to achieve obstacle avoidance. Alternatively, when it is determined that the target object is relatively low but both the width and length are relatively great, the self-moving device can move at a high speed to contact the target object, and can navigate along the edge of the target object so as to realize the clearing in the maximum range.

When the self-moving device executes the obstacle avoidance strategy, the point cloud of the target object is obtained according to the first images acquired by the image acquisition apparatus disposed on the self-moving device at multiple time points in combination with the position of the self-moving device during acquisition, wherein the obstacle avoidance rules are determined according to the point cloud.

In one embodiment, the process of obtaining the point cloud includes obtaining the point clouds of the target object according to the first images acquired by the image acquisition apparatus disposed on the self-moving device at multiple time points in combination with the position of the self-moving device during acquisition; and clustering the point clouds to obtain a clustering result, wherein the obstacle avoidance rules are determined according to the clustering result.

3D coordinate data of respective reference points of the target object may be determined by obtaining the point cloud of the target object. The reference points may generally refer to points on the target object whose distances can be measured, and may include, but not be limited to, boundary points, feature points, and the like on the target object.

For example, the coordinate data of the target object are 3D coordinates, then the 3D coordinate data of respective reference points may be converted into 2D coordinate data. By converting the 3D point cloud data into the 2D coordinate data, the amount of data processing can be effectively reduced and the efficiency of data processing is improved. The 2D coordinate data of respective reference points are clustered, and all points of which the distance from the coordinate data of adjacent reference points is less than a first preset value are regarded as an area; the size of each area is judged separately; if the size is greater than or equal to a second preset value, it is confirmed that the target object exists within an effective analysis range, and the self-moving device needs to formulate a corresponding obstacle avoidance strategy to avoid the corresponding target object.

The target object may be a combination of multiple objects, that is, in a certain area the sizes of multiple objects are captured in the first image at the same time, and the point cloud construction is performed for multiple objects. At this time, the point clouds may be clustered and the obstacle avoidance strategy is executed on the objects of which the sizes after clustering exceed a preset threshold, while the cautious obstacle avoidance strategy may be executed on the objects of which the sizes do not exceed the preset threshold for normal clearing work, which further refines the obstacle avoidance strategies.

The obstacle avoidance strategy may include not only the path, but also other control of the self-moving device, such as speed control and side brush control.

In one embodiment, if the size of the target object is greater than the predetermined object size, travel speed is reduced when the self-moving device is directed to approach the target object, that is, to prevent collision with the target object.

Continuing to refer to Fig. 3, S302 of obtaining the confirmation result based on the type information obtained by the visible light, and S3031 of judging whether the confirmation result belongs to the blacklist and S3032 of judging whether the confirmation result belongs to the whitelist are set separately. In other embodiments, S302 and S3031 may be combined into one step for execution, for example, the blacklist including slippers, fabrics (socks), shit, data lines, bases and chairs is in the dictionary data. The second image captured by the self-moving device is compared with each object in the blacklist, and the obtained confirmation result is to directly determine whether the second image contains the objects in the blacklist. Assuming that the second image contains the slippers, the confirmation result of belonging to the blacklist is directly obtained based on the second image including the slippers, and the execution of S305 goes ahead. Similarly, S302 and S3032 may also be combined into one step for execution, and the execution of S306 goes ahead when it is determined that the target object belongs to the whitelist.

For example, after S302 and S3031 are combined into one step, S306 or S304 may be selected for execution if the confirmation result shows that the target object does not belong to the blacklist. For example, S306 may be selected for execution if the second image does not contain the object in the blacklist, i.e., the self-moving device continues to advance based on information from other sensors, such as a bumper sensor and a ledge sensor, other than the distance information and type information of the self-moving device, or S304 is selected for execution, the target object is processed according to the logic of a generic object. S304 and subsequent S307 and S308 are as described above, and will not be repeated here. In the same way, after S302 and S3032 are combined into one step, S305 may be selected for execution if the confirmation result shows that the target object does not belong to the whitelist. For example, S305 may be selected for execution if the second image does not contain the object in the whitelist, i.e., the obstacle avoidance strategy is executed in combination with the data of the point cloud. S308 is as described above, and will not be repeated here.

It can be understood that although S301 is above S302 in Fig. 3, it does not mean that S301 must be executed before S302, and S301 and S302 may be performed simultaneously, or S301 may be executed after S302.

For example, S301 and S302 are executed independently, and there is no specific sequence therebetween.

The present disclosure also provides a computer-readable storage medium on which a computer program is stored, wherein the program, when executed by a processor, implements the above control method for the self-moving device.

In some possible embodiments, various aspects of the present disclosure may also be implemented in the form of a program product. The program product includes program codes, and when the program product runs on a terminal device, the program codes are used for causing the terminal device to execute the steps according to various example embodiments of the present disclosure described in the above section of the control method for the self-moving device of the present description.

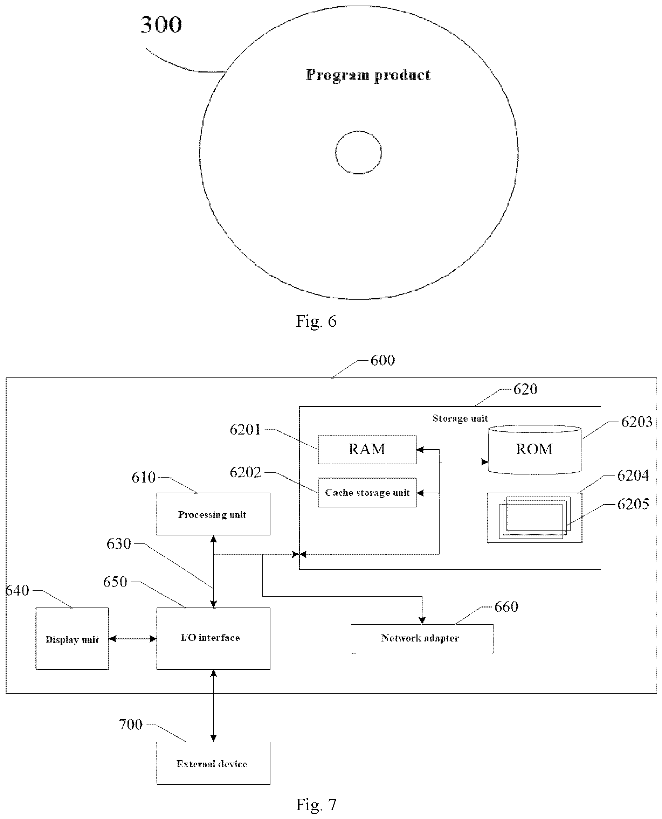

Referring to Fig. 6, the program product 300 for implementing the above method according to the embodiments of the present disclosure is described. The program product 300 may adopt a portable compact disk read-only memory (CD-ROM) and include program codes, and may run on a terminal device, such as a personal computer. However, the program product according to the present disclosure is not limited thereto. The readable storage medium herein may be any tangible medium that contains or stores a program, and the program may be used by or in combination with an instruction execution system, apparatus, or device.

The program product may adopt any combination of one or more readable mediums. The readable medium may be a readable signal medium or a readable storage medium. The readable storage medium may be, for example, but need not limited to, an electrical, magnetic, optical, electromagnetic, infrared, or semiconductor system, apparatus or device, or a combination of any of the above. More specific examples (a non-exhaustive list) of the readable storage medium include an electrical connection with one or more wires, a portable disk, a hard disk, a random access medium (RAM), a read-only memory (ROM), an erasable programmable read-only memory (EPROM or flash memory), optical fiber, a portable compact disc read-only memory (CD-ROM), an optical storage device, a magnetic storage device, or any suitable combination of the above.

The computer-readable storage medium may include a data signal propagated in a baseband or as part of a carrier wave, which carries readable program codes therein. Such propagated data signal may take a variety of forms, including but not limited to an electromagnetic signal, an optical signal, or any suitable combination of the above. The readable storage medium may also be any readable medium other than the readable storage medium, and the readable medium may transmit, propagate, or transport the program for use by or in combination with the instruction execution system, apparatus, or device. The program codes contained on the readable storage medium may be transmitted by any suitable medium, including but not limited to wireless, wired, optical cable, RF, etc., or any suitable combination of the above.

The program codes for executing operations of the present disclosure may be compiled in one or any combination of additional programming languages, and the programming languages include object-oriented programming languages such as Java and C++, as well as conventional procedural programming languages, such as "C" language or similar programming languages. The program codes may be executed entirely on a user computing device, partly on a user device, as a stand-alone software package, partly on the user computing device and partly on a remote computing device, or entirely on the remote computing device or a server. In situations where the remote computing device is involved, the remote computing device may be connected to the user computing device through any type of network, including a local area network (LAN) or a wide area network (WAN), or may be connected to an external computing device (for example, connected by Internet through an Internet service provider).

The present disclosure also provides an electronic device (including a processor), and a memory for storing instructions executable by the processor, wherein the processor is configured to execute the above control method for the self-moving device by executing the executable instructions.

It is understandable for those skilled in the art that various aspects of the present disclosure may be implemented as a system, method or program product. Therefore, various aspects of the present disclosure may be implemented in the following forms: complete hardware embodiments, complete software embodiments (including firmware, microcode, etc.), or embodiments combining both hardware and software aspects, which may be collectively referred to herein as "circuit," "module" or "system."

The electronic device 600 according to the embodiments of the present disclosure is described below with reference to Fig. 7. The electronic device 600 shown in Fig. 7 is only an example, and should not limit the scope of the functions and use of the embodiments of the present disclosure in any form.

As shown in Fig. 7, the electronic device 600 is in the form of a general-purpose computing device. Components of the electronic device 600 may include, but are not limited to, at least one processing unit 610, at least one storage unit 620, a bus 630 connecting different system components (including the storage unit 620 and the processing unit 610), a display unit 640, and the like.

The storage unit stores program codes, wherein the program codes may be executed by the processing unit 610, so that the processing unit 610 executes the steps according to various example embodiments of the present disclosure described in the above section of the control method for the self-moving device of the present description.

The storage unit 620 may include a readable medium in the form of a volatile storage unit, such as a random access memory (RAM) 6201 and/or a cache storage unit 6202, or may further include a read-only memory (ROM) 6203.

The storage unit 620 may also include a program/utility tool 6204 having a set (at least one) of program modules 6205, wherein such program modules 6205 include, but are not limited to, an operating system, one or more application programs, other program modules, and program data, and each or some combination of these examples may include implementation of a network environment.

The bus 630 may be representative of one or more types of bus structures, including a storage unit bus or a storage unit control system, a peripheral bus, a graphics acceleration port, a processing unit, or a local bus using any of multiple bus structures.

The electronic device 600 may also communicate with one or more external devices 700 (such as a keyboard, a pointing device and a Bluetooth device), and may also communicate with one or more devices that enable a user to interact with the electronic device 600, and/or any device (such as a router or a modem) that enables the electronic device 600 to communicate with one or more other computing devices. Such communication may be performed through an input/output (I/O) interface 650. In addition, the electronic device 600 may also communicate with one or more networks (such a local area network (LAN), a wide area network (WAN), and/or a public network, for example, the internet) through a network adapter 660. The network adapter 660 may communicate with other modules of the electronic device 600 through the bus 630. It should be understood that, although not shown in the figures, other hardware and/or software modules may be used in combination with the electronic device 600, including but not limited to microcode, a device drive, a redundant processing unit, an external disk driving array, a RAID system, a tape drive, or a data backup storage system, for instance.

From the description of the above embodiments, those skilled in the art can easily understand that the example embodiments described herein may be implemented by software or may be implemented by combining the software with necessary hardware. Therefore, the technical solutions according to the embodiments of the present disclosure may be embodied in the form of a software product, and the software product may be stored in a non-volatile storage medium (such as a CD-ROM, a U disk or a mobile hard disk) or on a network, and includes several instructions that cause a computing device (such as a personal computer, a server, or a network device) to execute the above control method for the self-moving device according to the embodiments of the present disclosure.

Other embodiments of the present disclosure will be readily conceivable by those skilled in the art upon consideration of the description after practice of the present disclosure herein. The present disclosure is intended to cover any transformations, uses, or adaptive changes of the present disclosure, and these transformations, uses, or adaptive changes follow general principles of the present disclosure and include common general knowledge or conventional technical means in the technical field not disclosed by the present disclosure. The description and example embodiments are regarded as illustrative only, with the true scope and spirit of the present disclosure being indicated by the foregoing claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A self-moving device, comprising:
a first image acquisition apparatus (20), a second image acquisition apparatus (30) and a controller; wherein
the first image acquisition apparatus (20) comprises an emission component for emitting infrared signal light and a first sensor for receiving a first image formed by reflection of the infrared signal light through a target object, and distance information of the target object is determined based on the first image;
the second image acquisition apparatus (30) comprises a second sensor, the second sensor receives a second image formed by reflection of visible light through the target object, and type information of the target object is determined based on the second image; and
the controller controls behaviors of the self-moving device based on at least one of the distance information and the type information.

2. The self-moving device according to claim 1, wherein the emission component comprises at least one linear laser device, infrared laser is emitted by the at least one linear laser device, the first image is captured by the first sensor, and the first image comprises light information of the linear laser reflected by the target object.

3. The self-moving device according to any one of claims 1 to 2, wherein the at least one linear laser device comprises a first linear laser unit (21) and a second linear laser unit (22); and
in a projection direction of the self-moving device, a connection line between the first sensor and an intersection point of linear lasers emitted by the first linear laser unit (21) and the second linear laser unit (22) is parallel to an advancing direction of the self-moving device.

4. The self-moving device according to any one of claims 1 to 3, wherein a first linear laser and a second linear laser are emitted simultaneously or alternately.

5. The self-moving device according to any one of claims 1 to 4, wherein
the first sensor is used for capturing a background image, and the background image does not include light information of the first linear laser and the second linear laser reflected by the target object.

6. The self-moving device according to any one of claims 1 to 5, wherein the second image acquisition apparatus (30) further comprises: a fill-in light (32), and at least part of visible light emitted by the fill-in light (32) enters the second sensor through reflection of the target object.

7. The self-moving device according to any one of claims 1 to 6, wherein
the controller controls the fill-in light (32) to be in an on state or an off state based on ambient brightness.

8. The self-moving device according to any one of claims 1 to 7, wherein
camera three-dimensional coordinate information of the target object relative to the first image acquisition apparatus (20) is determined based on the first image; and
world three-dimensional coordinate information of the target object is determined based on the camera three-dimensional coordinate information.

9. The self-moving device according to any one of claims 1 to 8, wherein
the second image is recognized by a neural network to determine a type of the target object.

10. The self-moving device according to any one of claims 1 to 9, wherein
a relationship between the target object and dictionary data is determined based on the type information to obtain a confirmation result;
an attitude of the target object is determined based on the distance information; and
the self-moving device is controlled to execute a corresponding travel strategy based on the confirmation result and/or the attitude of the target object.
